(19) Europäisches Patentamt
European Patent Office
Office européen des brevets

(11) Publication number: 0 272 932 A2

(12) # EUROPEAN PATENT APPLICATION

(21) Application number: 87311375.7

(22) Date of filing: 23.12.87

(51) Int. Cl.4: C 04 B 35/26
C 01 G 49/00

(30) Priority: 24.12.86 GB 8630924

(43) Date of publication of application:
29.06.88 Bulletin 88/26

(84) Designated Contracting States:
AT BE CH DE ES FR GB GR IT LI LU NL SE

(71) Applicant: MAGHEMITE INC.
2275 Speakman Drive Unit 2
Mississauga Ontario L5K 1B1 (CA)

(72) Inventor: Cavanagh, Patrick Edward
95 Balmoral Avenue
Toronto, Ontario M4V 1J5 (CA)

(74) Representative: Burford, Anthony Frederick et al
W.H. Beck, Greener & Co. 7 Stone Buildings Lincoln's Inn
London WC2A 3SZ (GB)

(54) **Production of strontium ferrite magnets.**

(57) Strontium hexaferrite magnets are produced by a novel procedure in which a novel eutectic of SrO and $Fe_2O_3$ containing 36 wt.% SrO and 64 wt.% $Fe_2O_3$ first is formed, particulated to below 1 micron, and reacted with particulated $Fe_2O_3$ with particle size below 1 micron while a magnetic field is applied.

EP 0 272 932 A2

**Description**

## PRODUCTION OF STRONTIUM FERRITE MAGNETS

### FIELD OF INVENTION

The present invention relates to the production of strontium ferrite magnets by a less costly and less energy-intensive process.

### BACKGROUND TO THE INVENTION

The conventional method of making strontium ferrite magnets involves an initial formation of strontium hexaferrite, grinding of the strontium hexaferrite to a particle size below 1 micron, placing the powder in a press, subjecting the powder to a strong magnetic field while the powder is pressed to the desired shape, and finally sintering the shape at a temperature about 1100° to 1300°C to produce a coherent magnet with a density between 4.9 and 5.0 g/cc.

The strontium hexaferrite from which the magnet is manufactured in this conventional procedure usually is made from hematite and celestite, i.e. strontium sulphate ore. The celestite first is reduced with carbon at elevated temperature up to about 1300°C to form water-soluble strontium sulfide. In a warm water suspension, the strontium sulfide then is reacted with sodium carbonate to produce sodium sulfate and strontium carbonate. The strontium carbonate then is mixed with hematite concentrate in the molar ratio $SrO{:}6Fe_2O_3$, being the stoichiometric ratio to produce strontium hexaferrite. The mixture is heated at elevated temperatures up to about 1300°C to produce strontium hexaferrite from the components.

### SUMMARY OF INVENTION

The present invention provides an improved method of producing strontium ferrite magnets from hematite and celestite. In the present invention, the formation of strontium carbonate is not required but rather the eutectic of strontium oxide and hematite, which contains 36% of strontium oxide to 64% of hematite, corresponding to a molar ratio of $SrO{:}1.15Fe_2O_3$, first is formed.

In accordance with the present invention, therefore, there is provided a novel method of forming strontium hexaferrite, which comprises reacting a strontium-containing compound and hematite in proportions and under conditions to form a eutectic of SrO and $Fe_2O_3$, and reacting the eutectic with sufficient hematite to form strontium hexaferrite.

By initially forming the eutectic in this way, a less-costly and less energy-intensive process results.

The present invention also includes the eutectic composition of SrO and $Fe_2O_3$ containing about 36 wt.% SrO and 64 wt.% $Fe_2O_3$ as well as a method of forming such eutectic composition, which comprises reacting a strontium-containing compound with hematite in proportion to form a eutectic of SrO and $Fe_2O_3$ of the above-noted composition.

### BRIEF DESCRIPTION OF DRAWINGS

Figure 1 is the phase diagram for the system $SrO\text{-}Fe_2O_3$ on which the eutectic and hexaferrite compositions are identified;

Figure 2 is a schematic flow sheet of a method of forming strontium hexaferrite magnets in accordance with one embodiment of this invention; and

Figure 3 is a schematic flow sheet of a prior art method of forming strontium hexaferrite magnets.

### DESCRIPTION OF PREFERRED EMBODIMENTS

Referring to the drawings, the phase diagram for the system $SrO\text{-}Fe_2O_3$ developed by the applicant is shown in Figure 1. The composition of the eutectic of SrO and $Fe_2O_3$ at a composition 36% SrO and 64% $Fe_2O_3$ is identified as is the relation to strontium hexaferrite, which corresponds to the molar ratio $SrO.6Fe_2O_3$.

A schematic flow sheet according to one embodiment of the process of the present invention is shown in Figure 2. As seen therein, celestite is mixed with hematite in the presence of calcium carbonate as a slagging material and the components are smelted together at a temperature above about 1200°C up to about 1300°C, preferably about 1250°C, so as to form a eutectic of SrO and $Fe_2O_3$ and a slag which is drawn off. This eutectic has been found can be magnetized quite strongly.

After cooling below its solidification temperature, either by casting or shotting in water the eutectic is ground and mixed with hematite to provide a mixture of particles sized less than about 1 micron, typically about 0.8 micron, and the weight ratio necessary to conform to the stoichiometry of stontium hexaferrite. In the strontium ferrite mole ratio composition $SrO.6Fe_2O_3$, the hematite is used in a quantity 2.68 times the weight of the eutectic.

The composition of the specular hematite mixed with the eutectic has less than the maximum oxygen content in its structure but is not sufficiently low in oxygen to become gamma-hematite, which is very strongly magnetic. However, the specular hematite ore, finely ground to below about 1 micron is sufficiently magnetizable that the powder can be placed in a magnetic field and all the particles align magnetically.

The mixture of the eutectic and the hematite is placed in a press in a magnetic field, pressure is applied typically about 12,000 psi, and the compact is heated at elevated temperature, generally from about 1200°C to about 1300°C, preferably between 1,220° and 1,260°C for 2 hours, to cause reaction between the particles and formation of strontium hexaferrite. The fused compact is rapidly cooled, typically below about 800°C, while the magnetic field still is applied.

As may be seen by comparison of the flow sheet of Figure 2 with that of conventional prior art procedures illustrated in Figure 3, the intermediate formation of strontium carbonate is eliminated and one less heating cycle is required in the method of the invention. The firing of the finished magnet, however, requires longer, since the reaction between the eutectic and hematite takes place as the final step, rather than being preformed in the prior art. Overall, however, equipment costs and heating cycles are significantly decreased, producing a production cost of approximately one-half to two-thirds of the conventional operating costs for the production of strontium ferrite magnets.

EXAMPLES

Strontium hexaferrites were produced following the procedure outlined in Figure 2. The magnetic properties of the intermediate eutectic components as well as mixtures thereof with other materials are outlined in the following Table I:

Table I

MAGNETIC PROPERTIES OF STRONTIUM FERRITE MAGNETS USING STRONTIUM OXIDE/HEMATITE EUTECTIC

| | MIX | RESIDUAL MAGNETISM Br (gauss) | INTRINSIC COERCIVE FORCE Hci (oersteds) |
|---|---|---|---|
| 1. | B1 | (a) 1120 | 4750 |
| | 1 kg Eutectic # 1 (shot) plus 2.68 kg Maghemite | (b) 1190 | 4750 |
| 2. | B2 | (a) 1000 | 3700 |
| | 1 kg Eutectic # 2 (cast) plus 2.68 kg Maghemite | (b) 1040 | 3800 |
| 3. | Strontium Hexaferrite plus 2.5% Mix B1 | (a) 3680<br>(b) 3760 | 4130<br>4130 |
| 4. | 50% (Mix B1)<br>50% (1 $SrO.3Fe_2O_3.3Cr_2O_3$) | (a) 240<br>(b) 304 | 8500<br>8500 |
| 5. | Eutectic #1 cooled very rapidly by shotting in water | (a) 1800<br>(b) 1665 | 3350<br>3715 |
| 6. | Eutectic #2 cooled more slowly by casting | (a) 1980<br>(b) 1730 | 3275<br>3700 |

Note: (a) Fired 1 hour @ 1220°C

(b) Refired 1 hour @ 1230°C

Mixtures of these 6 formulations also can provide desired properties within the limits shown.

SUMMARY OF DISCLOSURE

In summary of this disclosure, the present invention provides a novel method of making strontium ferrite ceramic magnets by direct reaction between the eutectic of $SrO.Fe_2O_3$ and the type of specular hematite which becomes magnetizable below about 1 micron particle size, providing significant savings in production costs. Modifications are possible within the scope of this invention

**Claims**

1. A method of forming a eutectic of SrO and $Fe_2O_3$, characterized by reacting a strontium-containing compound with hematite in proportions to form a eutectic of SrO and $Fe_2O_3$ containing about 36 wt.% SrO and about 64 wt.% $Fe_2O_3$.

2. The method claimed in claim 1, characterized in that said strontium-containing compound is strontium sulfate.

3. The method claimed in claim 2, characterized in that said strontium sulfate is in the form of celestite ore.

4. The method claimed in claim 3, characterized in that said celestite and hematite are reacted together at a temperature of about 1220° to about 1300° C in the presence of a suitable slagging compound

5. The method claimed in claim 4, characterized in that said slagging compound is calcium carbonate.

6. An eutectic of SrO and $Fe_2O_3$ containing about 36 wt.% SrO and 64 wt.% $Fe_2O_3$.

7. A method of forming strontium ferrite, characterized by further reacting the eutectic produced by the method of any one of the claims 1 to 5 with sufficient hematite to form strontium hexaferrite.

8. The method claimed in claim 7, characterized in that said eutectic and hematite are mixed together to form a mixture in which the particle sizes thereof are less than about 1 micron.

9. The method claimed in claim 8, characterized in that said mixture is compacted to the desired shape and sintered at a temperature of about 1200° to about 1300° C while maintaining the compaction pressure to effect said reaction to form strontium hexaferrite and form a dense coherent product.

10. The method claimed in any one of claims 7 to 9, characterized in that a strong magnetic field is applied to said mixture during said compaction to form a magnet.

FIG.1.

EQUILIBRIUM DIAGRAM SYSTEM $SrO - Fe_2O_3$

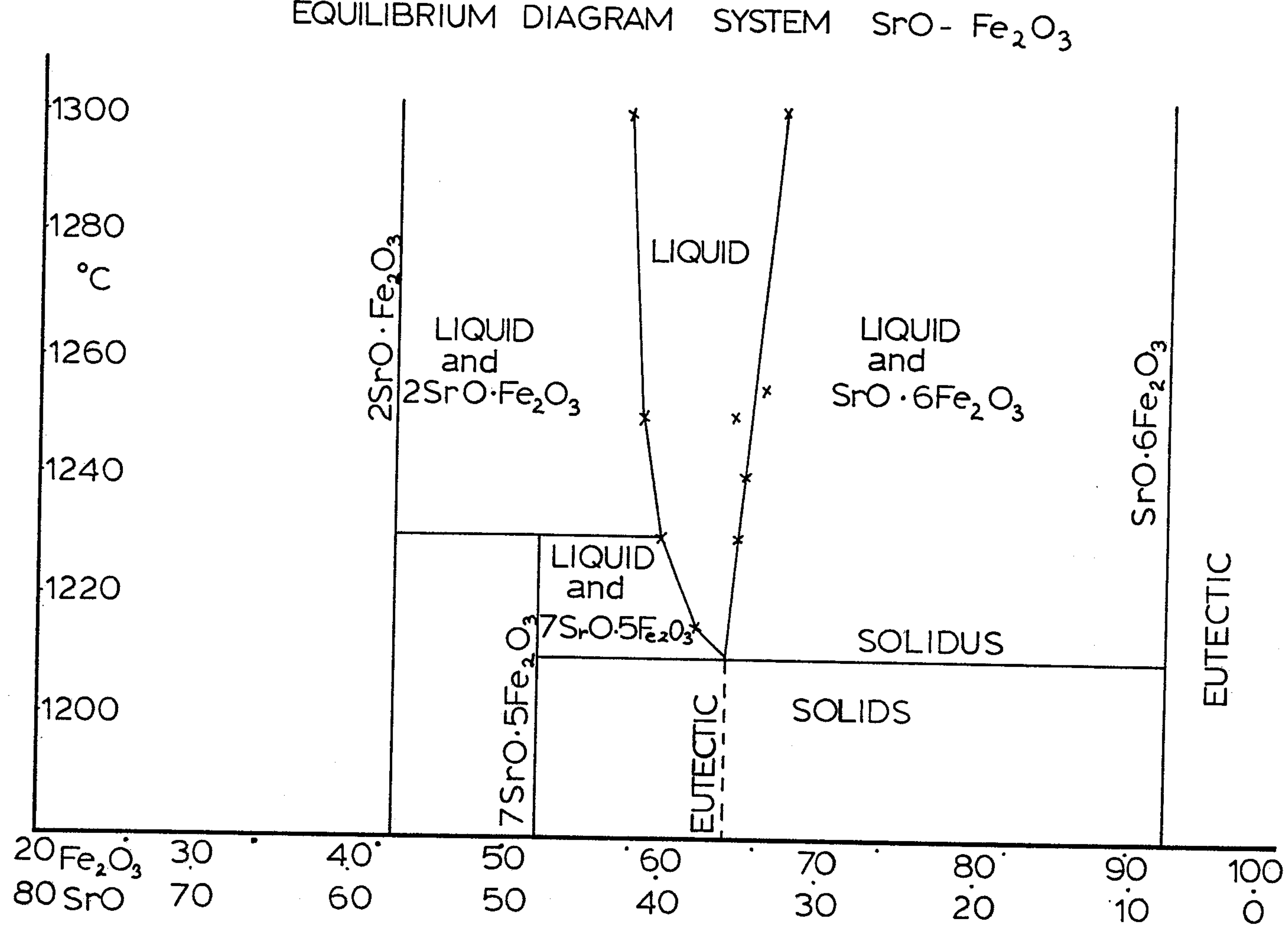

0272932

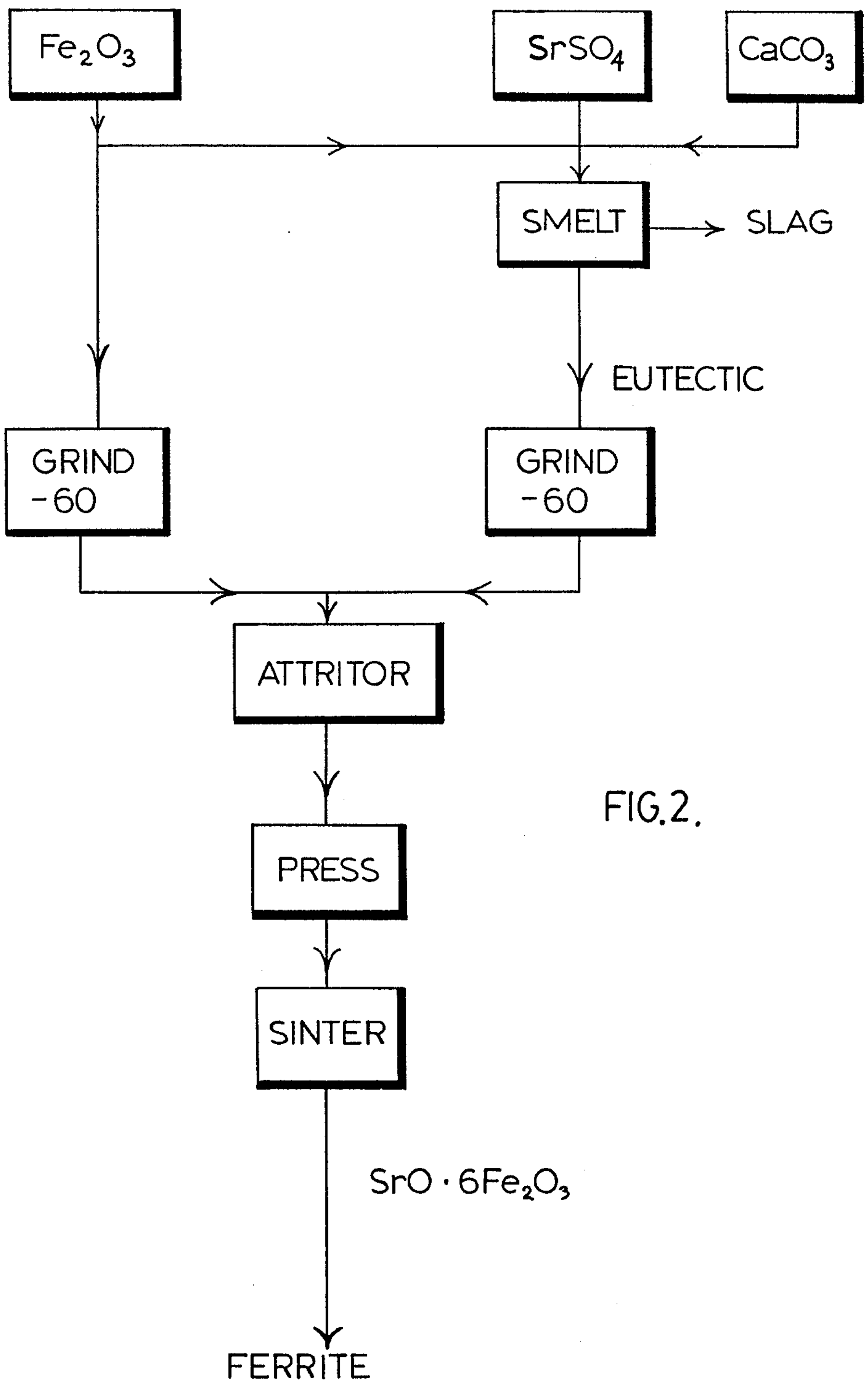


FIG.2.

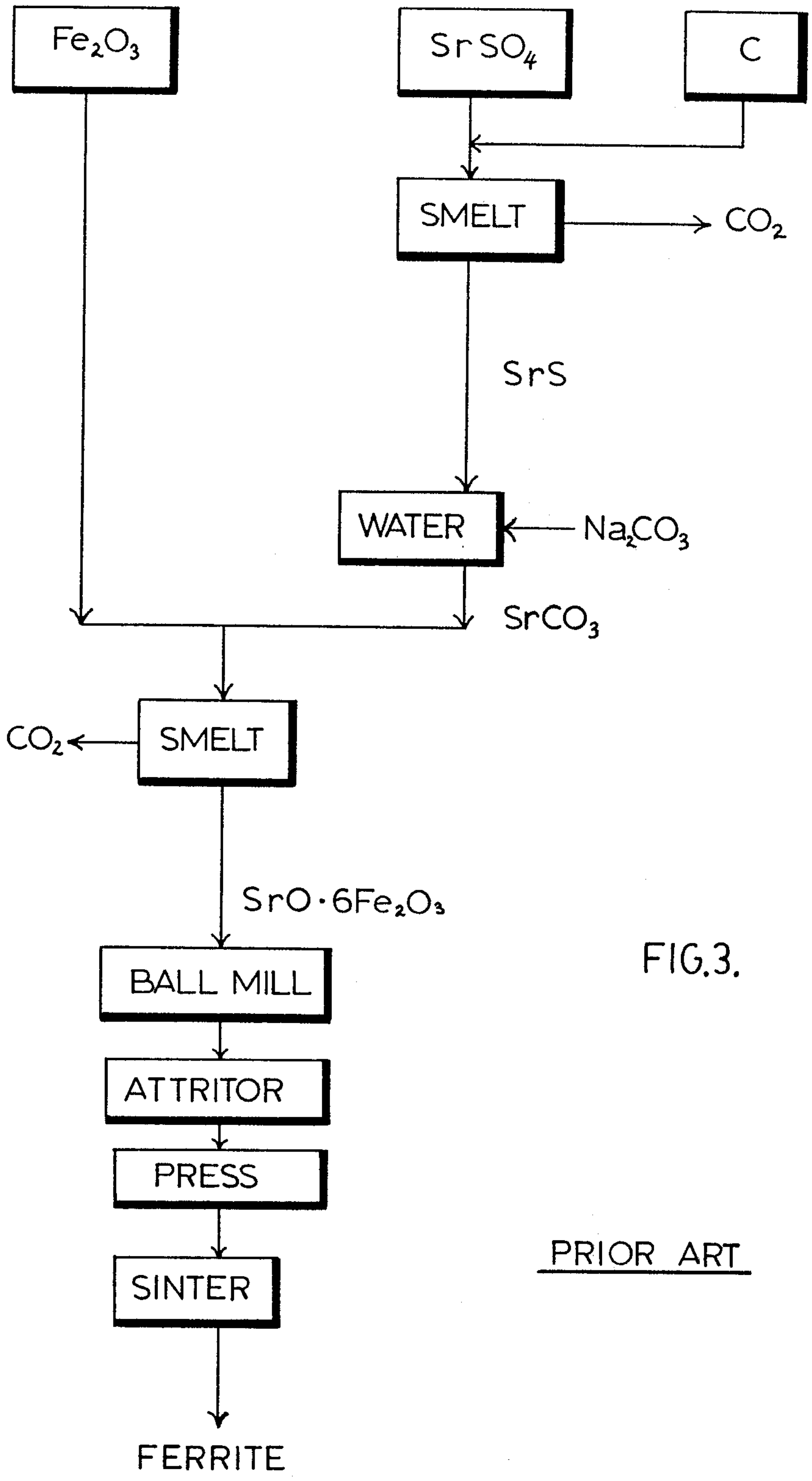


FIG.3.

PRIOR ART